# EUROPÄISCHE PATENTANMELDUNG

(11) **EP 4 756 731 A1**
(43) Veröffentlichungstag der Anmeldung: **10.06.2026**
(21) Anmeldenummer: 24217882.0
(22) Anmeldetag: 05.12.2024
(51) Int. Cl.: G06V 10/75, G01N 19/02, G01N 21/21, G01N 21/55, G06V 20/56

(54) **VORRICHTUNG UND VERFAHREN ZUM VORAUSSCHAUENDEN ABSCHÄTZEN EINES REIBWERTKOEFFIZIENTEN-NETZES EINER FAHRBAHNOBERFLÄCHE, UND FORTBEWEGUNGSMITTEL**

(71) Anmelder: Fraunhofer-Gesellschaft zur Förderung der angewandten Forschung e.V., 80686 München (DE)
(72) Erfinder: DUMLER, Dietrich, 80686 München (DE); WENNINGER, Franz, 80686 München (DE)
(74) Vertreter: Zinkler, Franz

(57) **Zusammenfassung**

Beschrieben ist eine Vorrichtung (100) zum vorausschauenden Bestimmen eines Reibwertkoeffizienten-Netzes (10) einer Oberfläche (20), mit folgenden Merkmalen: einer Erfassungseinrichtung (30) zum Erfassen mindestens einer Gruppe von Pixeln (31), welche die Oberfläche (20) wenigstens teilweise wiedergeben, um in einem Bereich der erfassten Oberfläche (20) aus der mindestens einen Gruppe von Pixeln (31) ein erstes Netz aus ersten Werten zu bestimmen, wobei das erste Netz dem Bereich überlagert ist, und eine Bestimmungseinheit (40) zum Bestimmen von Reibwertkoeffizienten-Werten, welche das Reibwertkoeffizienten-Netz (10) bilden basierend auf den ersten Werten des ersten Netzes, wobei das Reibwertkoeffizienten-Netz (10) eine Verteilung der bestimmten Reibwertkoeffizienten-Werte darstellt. Ferner sind ein Fortbewegungsmittel (1000) mit einer solchen Vorrichtung und ein Verfahren zum vorausschauenden Bestimmen eines Reibwertkoeffizienten-Netzes (10) einer Oberfläche beschrieben.

## Beschreibung

Es sind eine Vorrichtung und ein Verfahren zum vorausschauenden Abschätzen eines Reibwertkoeffizienten-Netzes einer Fahrbahnoberfläche beschrieben. Außerdem betrifft die vorliegende Erfindung ein Fortbewegungsmittel mit einer solchen Vorrichtung.

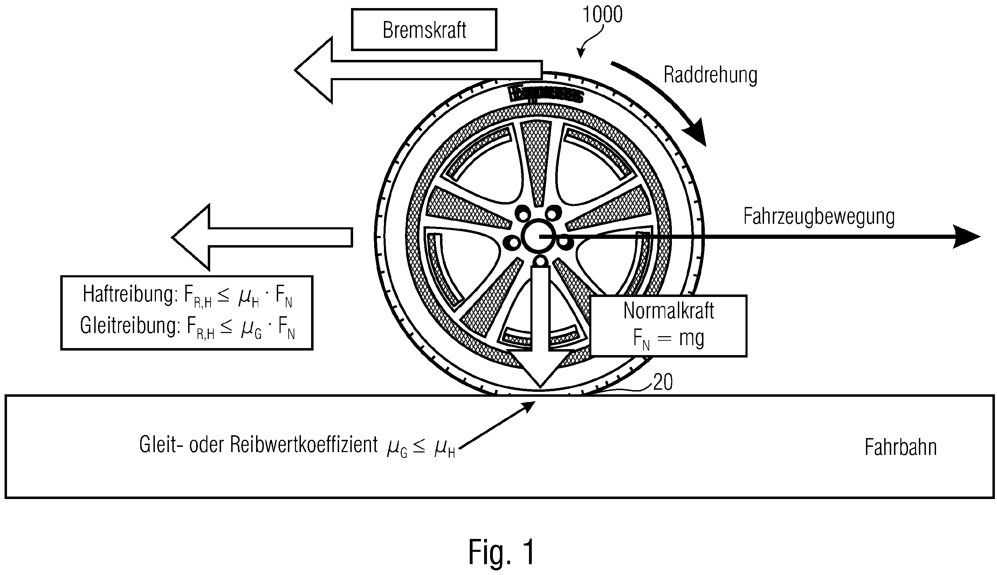

Beim Bremsen oder Beschleunigen eines Fahrzeugs wird eine entsprechende Kraft über die Reifen auf die Straße übertragen. Fig. 1 zeigt zum Beispiel einen Bremsvorgang.

Die vom Fahrzeug (angedeutet durch einen Reifen) aufgebrachte Bremskraft wirkt nicht direkt auf die Bewegung des Fahrzeugs, sondern wirkt der Raddrehung entgegen. Diese Bremskraft wird dann über die Reifen in Form von Haft- oder Gleitreibung auf die Straße übertragen. Die maximal übertragbare Reibkraft hängt von der Normalkraft (d.h. dem Gewicht des Fahrzeugs und der Fahrbahnsteigung) und dem Reibungskoeffizienten zwischen Reifen und Straße ab. Wenn die Bremskraft die maximal übertragbare Reibkraft übersteigt, kommt es zum Durchrutschen der Reifen (Englisch: Slip), wenn die Raddrehung nicht mehr der Fahrzeugbewegung entspricht.

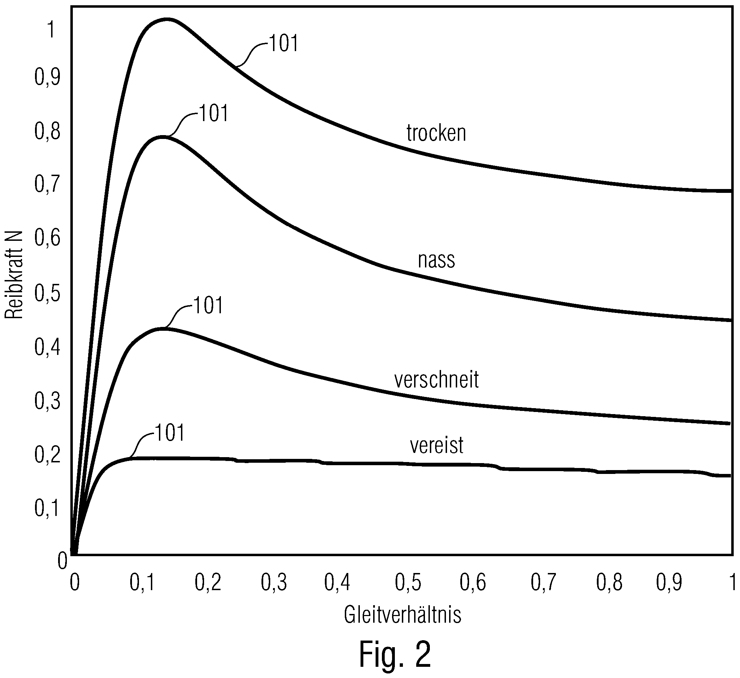

Fig. 2 veranschaulicht den Verlauf der resultierenden Reibkraft, normiert auf die Normalkraft, beim Versuch, einen Reifen über die Fahrbahnoberfläche ohne Drehbewegung zu bewegen, unter verschiedenen Fahrbahnzuständen wie trocken, nass, verschneit oder vereist. Zu Beginn ruht der Reifen und widersteht der Bewegung aufgrund der Haftreibung. Mit zunehmender aufgebrachter Kraft steigt die Reibkraft an, bis sie einen maximalen Wert erreicht - das Maximum jeder in Figur 2 dargestellten Kurve. Dieser Punkt wird als Haftgrenze bezeichnet - der Moment, in dem die aufgebrachte Kraft die maximale Haftreibung übersteigt und die Bewegung vom Haften zum Gleiten übergeht. Nach diesem Übergang zur Gleitbewegung nimmt die gemessene Reibkraft deutlich ab. Das bedeutet, dass weniger Kraft auf die Fahrzeugbewegung übertragen werden kann, sobald der Reifen anfängt zu rutschen. Die größte Wirkung beim Beschleunigen oder Bremsen auf die Fahrzeugbewegung wird somit erzielt, wenn der Reifen nicht in die Gleitbewegung übergeht und weiterhin Haftreibung besteht. Es gibt einige Ansätze, den Reibkoeffizienten in Echtzeit zu schätzen. Ein allgemeiner Überblick zum Schätzen des Reibkoeffizienten ist in der Referenz [1] gegeben. Einen Ansatz mit vorausschauender Kamera beschreibt Referenz [2].

US 2017 0 550 252 A1 und US 2018 0 108 792 beschreiben eine vorausschauende Kamera verbunden mit einem lokalen Sensor zur Referenzierung. DE 2020 10 203 293 A1 beschreibt ein System, das geeignet ist, den wetterbedingten Straßenzustand zu bestimmen.

Eine Aufgabe der vorliegenden Erfindung ist es, eine Vorrichtung und ein Verfahren, sowie ein Fortbewegungsmittel bereitzustellen, mit welchem die Brems- bzw. Beschleunigungskraft so begrenzt werden kann, dass ein Durchrutschen der Reifen des Fortbewegungsmittels vermieden und die maximale Übertragung der Kraft auf die Fahrbahn gewährleistet wird.

Diese Aufgabe wird durch die Gegenstände der beigefügten unabhängigen Ansprüche gelöst.

Vorschlagsgemäß umfasst die Vorrichtung zum vorausschauenden Bestimmen eines Reibwertkoeffizienten-Netzes einer Oberfläche eine Erfassungseinrichtung zum Erfassen mindestens einer Gruppe von Pixeln, welche die Oberfläche wenigstens teilweise wiedergeben, um in einem Bereich der erfassten Oberfläche aus der mindestens einen Gruppe von Pixeln ein erstes Netz aus ersten Werten zu bestimmen, wobei das erste Netz dem Bereich überlagert ist. Außerdem umfasst die Vorrichtung eine Bestimmungseinheit zum Bestimmen von Reibwertkoeffizienten-Werten, welche das Reibwertkoeffizienten-Netz bilden basierend auf den ersten Werten des ersten Netzes, wobei das Reibwertkoeffizienten-Netz eine Verteilung der bestimmten Reibwertkoeffizienten-Werte darstellt. Die Oberfläche kann beispielsweise ein Fahrbahn eines PKWs oder einer Flugzeuges oder einer Bahn sein. Die Oberfläche können beispielsweise auch die Tragflächen eines Flugzeuges sein. Generell kann die Oberfläche eine Fläche sein, deren Reibwertkoeffizienten für eine Aktion von Interesse sind. Die Bestimmungseinheit kann die erfasste mindestens eine Gruppe an Pixel hinsichtlich einer Information, die die einzelnen Pixel hinsichtlich eines Zustandes der Oberfläche umfassen auswerten und daraus aktuelle, die Oberfläche betreffende Reibwertkoeffizient bestimmen. Die Bestimmungseinheit kann die Pixel insbesondere hinsichtlich des aktuellen Aggregatszustandes von Wasser (H₂O) auswerten. Die Bestimmungseinheit könnte als Künstliche-Intelligenz, insbesondere ein neuronales Netz, gegeben sein.

Gemäß einem weiteren Aspekt der vorliegenden Erfindung ist ein Verfahren zum vorausschauenden Bestimmen eines Reibwertkoeffizienten-Netzes einer Oberfläche vorgeschlagen. Das Verfahren umfasst ein Erfassen mindestens einer Gruppe von Pixeln, um aus der mindestens einen Gruppe von Pixeln einen Bereich einer Oberfläche zu bestimmen und um in dem Bereich aus der mindestens einen Gruppe von Pixeln ein erstes Netz aus ersten Werten zu bestimmen. Ferner umfasst das Verfahren ein Bestimmen eines Bereiches der Oberfläche auf Basis einer in der mindestens einen Gruppe von Pixeln enthaltenen Information, und ein anschließendes Bestimmen von Reibwertkoeffizienten-Werten in einem Reibwertkoeffizienten-Netz, welches dem Bereich entspricht, basierend auf den ersten Werten des ersten Netzes, um eine Verteilung der bestimmten Reibwertkoeffizienten-Werte zu erhalten.

Ein weiterer Aspekt der vorliegenden Erfindung betrifft ein Fortbewegungsmittel mit der zuvor beschriebenen Vorrichtung, wobei das Fortbewegungsmittel einen zusätzlichen Sensor umfasst. Dieser Sensor ist dazu ausgebildet, der Bestimmungseinheit Informationen bezüglich mindestens eines Referenzwertes und/oder Bewegungsdaten des Fortbewegungsmittels bereitzustellen. Um der Bestimmungseinheit in situ Referenzwerte bereitzustellen, können verschiedene Ansätze verfolgt werden, insbesondere: Kontaktbasierte Ansätze nutzen die Interaktion des Fortbewegungsmittels mit der Fahrbahnoberfläche. Hierbei ist die Bestimmungseinheit dazu ausgebildet, die auf die Räder des Fortbewegungsmittels übertragenen Kräfte auszuwerten, wie zum Beispiel das Drehmoment infolge von Antriebs- oder Bremsvorgängen. Zusätzlich kann der Reifen-Schlupf ermittelt werden, entweder durch die Bestimmung der Bewegungsdaten oder mithilfe von Sensoren wie akustischen Sensoren, Gyroskopen oder Reifendrucküberwachungssystemen (TPMS), die ein Durchrutschen der Reifen erkennen können. Durch die Analyse der Beziehung zwischen den aufgebrachten Kräften und dem erkannten Reifen-Schlupf kann die tatsächliche Haftgrenze angenähert werden.

Die Bestimmungseinheit kann auch dazu ausgebildet sein, Verfahren, die unabhängig von der Interaktion mit dem Fortbewegungsmittel arbeiten, auszuführen. Solche Verfahren können den Reibwert anhand von Informationen über die Beschaffenheit der Fahrbahnoberfläche schätzen. Hierzu werden Sensoren eingesetzt, die Eigenschaften der Oberfläche erfassen, indem sie deren Interaktion mit Licht oder anderen elektromagnetischen Wellen messen. Beispiele für solche Sensoren sind Radar, Lidar oder Kameras.

Die Bestimmungseinheit ist dazu ausgebildet, die vom zusätzlichen Sensor bereitgestellte Referenzinformation zu verwenden, um die, insbesondere tatsächliche, Haftgrenze zwischen den Reifen und der Fahrbahn anhand des normierten Reibungskoeffizient-Netzes und dem Referenzwert zu berechnen.

Ferner ist die Bestimmungseinheit dazu ausgebildet, basierend auf dem ermittelten Reibungskoeffizienten die Steuerung des Fortbewegungsmittels zu beeinflussen. Falls der Reibungskoeffizient darauf hindeutet, dass die Gefahr eines Haftungsverlusts besteht und das Fortbewegungsmittel bei der eingeleiteten Aktion in eine Gleitbewegung übergehen könnte, können entsprechende Regelungen in den Antriebs- oder Bremssystemen vorgenommen werden, um die Stabilität und Sicherheit des Fortbewegungsmittels zu gewährleisten.

Ein weiterer Aspekt der vorliegenden Erfindung betrifft ein Computerprogramm zur Durchführung des hierin beschriebenen Verfahrens, wenn das Computerprogramm auf einem Rechner abläuft.

Mit der hierin vorgeschlagenen technischen Lehre können die Reibwertkoeffizienten vorausschauend bestimmt und lokalisiert werden, d.h. einem Fahrbahnabschnitt, welcher abgelichtet worden ist, zugeordnet werden.

Wenn die Reibwertkoeffizienten-Werte der Fahrbahn bekannt sind, kann eine ideale Bremsung im Voraus geplant werden. Das heißt, das Rutschen der Räder kann reduziert bzw. verhindert werden, wenn die Bremskraft immer auf die maximale Reibkraft begrenzt wird. Bevorzugt kann die Brems- oder Beschleunigungskraft auf die maximale Reibkraft beschränkt werden, um das Fortbewegungsmittel sicherer zu machen. Die daraus resultierende Bremsleistung ist deutlich höher als mit einem ABS erreichbar. Eventuell könnte das ABS durch die vorgeschlagene Vorrichtung ersetzt werden. Auch beim Anfahren funktioniert das System: Die Leistung kann automatisch begrenzt werden, um ein Durchdrehen der Räder zu verhindern. Jegliches Rutschen verringert nicht nur die Effizienz, sondern erhöht auch den Reifenabrieb, was sich auf Kosten und Umweltbelastung auswirkt. Mit der vorgeschlagenen technischen Lehre können also auch die laufenden Kosten des Fortbewegungsmittels reduziert werden.

Bevorzugte Ausführungsbeispiele der vorliegenden Erfindung werden nachfolgend Bezug nehmend auf die beiliegenden Zeichnungen detailliert erläutert. Es zeigen:
- Fig. 1: einen schematischen Bremsvorgang eines Fortbewegungsmittels;
- Fig. 2: den Verlauf der resultierenden Reibkraft, normiert auf die Normalkraft, bei fortlaufendem Durchrutschen der Reifen bei verschiedenen Fahrbahnzuständen;
- Fig. 3: eine Falschfarbdarstellung von in-situ bestimmen Reibwertkoeffizienten-Werte auf einer Fahrbahn;
- Fig. 4: eine schematische Darstellung der hierin beschriebenen Vorrichtung;
- Fig. 5: eine weitere schematische Darstellung der hierin beschriebenen Vorrichtung;
- Fig. 6: eine weitere schematische Darstellung der hierin beschriebenen Vorrichtung;
- Fig. 7: eine weitere schematische Darstellung der hierin beschriebenen Vorrichtung;
- Fig. 8a, b: eine schematische Darstellung eines Fortbewegungsmittel mit der hierin beschriebenen Vorrichtung; und
- Fig. 9: ein Ablaufschema des vorgeschlagenen Verfahrens.

Einzelne Aspekte der hierin beschriebenen Erfindung sind nachfolgend in den Figuren 1 bis 9 beschrieben. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt sein müssen.

Wenn eine Komponente als "dazu ausgebildet ist, etwas zu tun" hierin beschrieben ist, soll es bedeuten, dass die Komponente entsprechend baulich und physikalisch so gestaltet worden ist, damit die Komponenten das was sie ausführen soll, auch auszuführt.

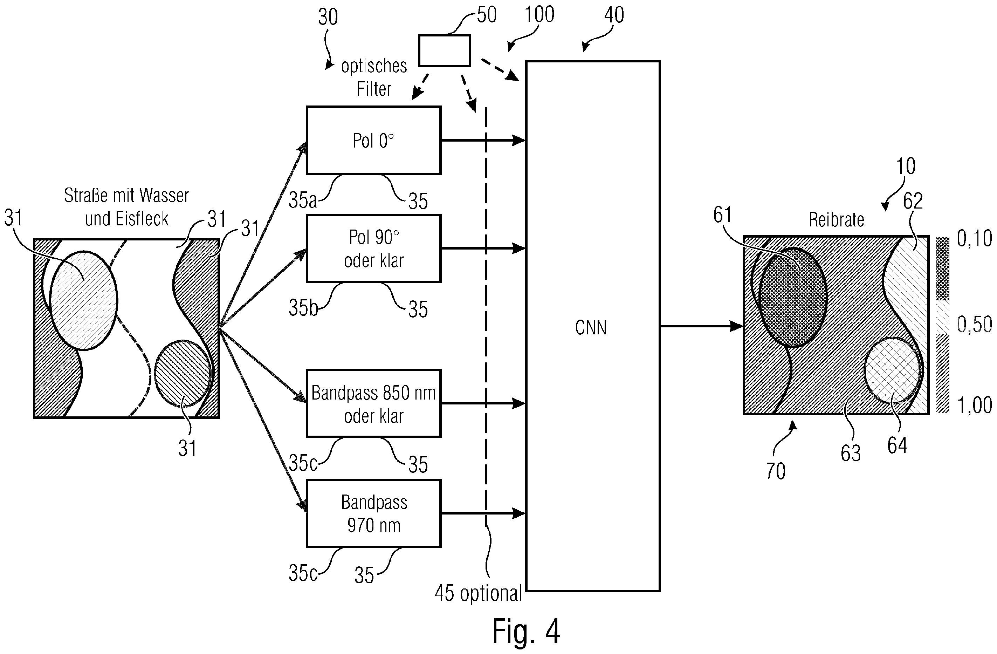

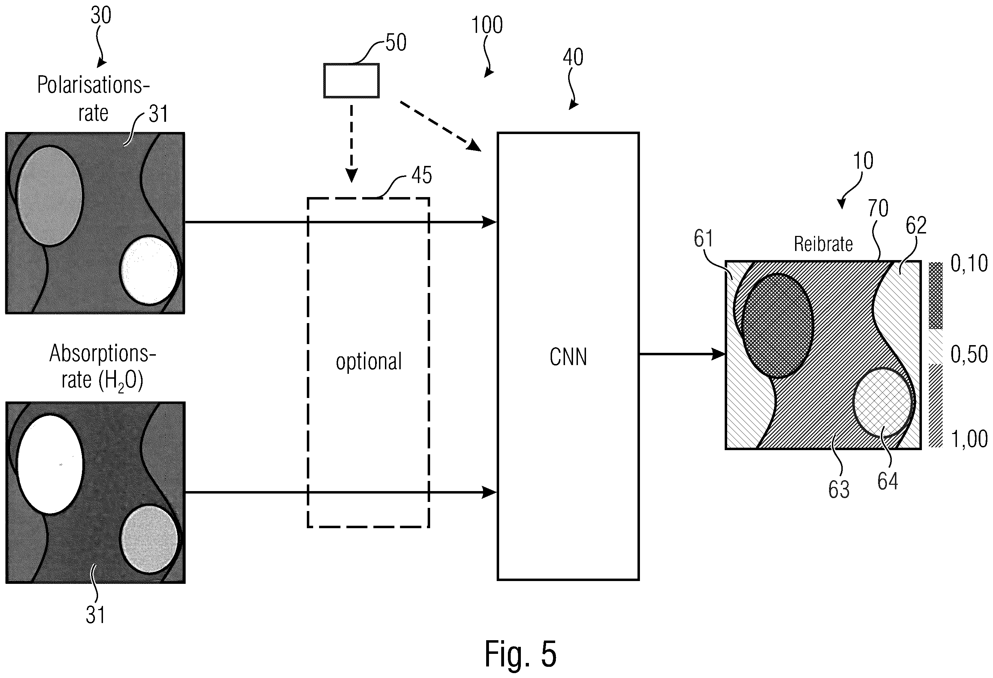

Figs. 1 und 2 wurden bereits im einleitenden Teil erörtert. Figs. 4 bis 7 zeigen jeweils eine vorgeschlagene Vorrichtung 100, welche mit Bezug auf Figs. 4 bis 7 nachfolgend beschrieben ist. Die Vorrichtung 100 zum vorausschauenden Bestimmen eines Reibwertkoeffizienten-Netzes 10 einer Oberfläche 20 weist eine Erfassungseinrichtung 30 zum Erfassen mindestens einer Gruppe von Pixeln 31, welche die Oberfläche 20 (siehe Figs 1, 3 oder 8) wenigstens teilweise wiedergeben, um in einem Bereich der erfassten Oberfläche 20 aus der mindestens einen Gruppe von Pixeln 31 ein erstes Netz aus ersten Werten zu bestimmen, wobei das erste Netz dem Bereich überlagert ist. Die Erfassungseinrichtung 30 umfasst mindestens einen Sensor 35, bevorzugt mehrere Sensoren 25, um unterschiedliche Aspekte hinsichtlich eines Aggregatzustandes von Wasser auf der Oberfläche 20, insbesondere in situ, also aktuell, zu erfassen. Die vorgeschlagene Vorrichtung 100 umfasst ferner eine Bestimmungseinheit 40 zum Bestimmen von Reibwertkoeffizienten-Werten, welche das Reibwertkoeffizienten-Netz 10 basierend auf den ersten Werten des ersten Netzes bilden, wobei das Reibwertkoeffizienten-Netz 10 eine Verteilung der bestimmten Reibwertkoeffizienten-Werte darstellt. In den Fig 4 bis 7 ist die Bestimmungseinheit 40 als neuronales Netzwerk (CNN) dargestellt. Alternativ kann die Bestimmungseinheit jedoch auch als ein Verfahren oder Algorithmus umgesetzt sein, das/der dazu ausgebildet ist, eine festgelegte Abfolge von Operationen auszuführen. Die Bestimmungseinheit 40 kann in verschiedenen Konfigurationen realisiert sein. Sie kann insbesondere als Prozessor, als Field Programmable Gate Array (FPGA) oder als anwendungsspezifische integrierte Schaltung (ASIC) ausgeführt sein. Die Figs. 4 und 5 zeigen beispielsweise ein Reibwertkoeffizienten-Netz 10, welches durch die Vorrichtung 100 auf Basis der erfassten Pixel 31 bestimmt werden kann.

Die Bestimmungseinheit 40 ist dazu ausgebildet, die Verteilung der bestimmten Reibwert-koeffizienten-Werte dem Bereich der erfassten Oberfläche 20 zu überlagern und eine eindimensionale oder mehrdimensionale Verteilung zu bestimmen. Die eindimensionale oder mehrdimensionale Verteilung bildet zum Beispiel das Reibwertkoeffizienten-Netz 10 aus, welches in Figs. 4 und 5 als Bild 70 dargestellt sind. Die mehrdimensionale Verteilung ist bevorzugt eine zweidimensional bis n-dimensionale Verteilung, bei welcher jeder Wert zur Berechnung des Reibwertkoeffizienten-Netzes einbezogen wird. Insbesondere kann die Verteilung in Form einer Matrix mit den Dimensionen N, M, C und T gegeben sein, dabei steht:
a) N für eine horizontale Verteilung der Pixel,
b) M für eine vertikale Verteilung der Pixel,
c) C für eine Anzahl verschiedener Kanäle (englisch "Channels"), wie beispielsweise RGB, NIR, 970 nm, Polarisation 0°, Polarisation 90° usw.,
d) T für verschiedene Zeitpunkte.

Wobei N, M, C und T natürliche Zahlen und voneinander unabhängig sind und einzeln oder in beliebiger Kombination als Eingabe für den Algorithmus zur Berechnung des Reibungskoeffizienten-Netzes verwendet werden können.

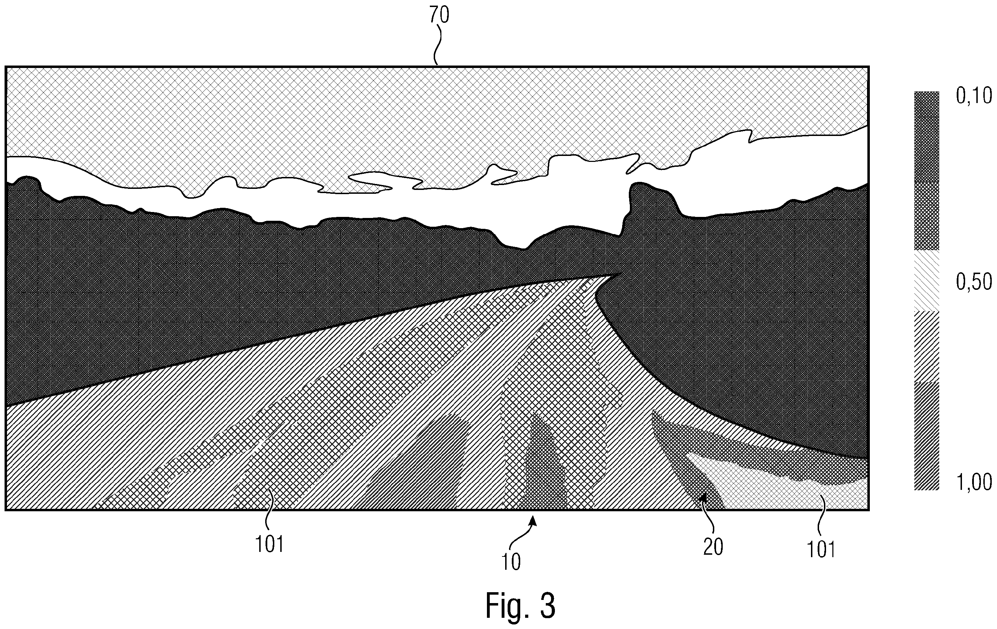

Das Reibungskoeffizienten-Netz 10 wird unter Verwendung der erfassten Pixel-Matrix berechnet und ist als normiertes Netz mit Zahlenwerten von 0 (geringste Reibung) bis 1 (größte Reibung) definiert. Wenn in Referenz gesetzt mit mindestens einem in situ erfassten absoluten Wert oder Ähnlichem ergeben sich die berechneten Haftgrenzen der in den Pixeln abgebildeten Bereiche. Die Matrix kann direkt für die Überlagerung der Frontsicht der Oberfläche 20 genutzt werden (siehe Fig. 3). In Fig. 3 bedeutet: etwa 0 (geringe Haftung, stark Rot), 1 (genug Haftung, Grün), mix dazwischen. Typischerweise wird die Matrix an eine Steuerung 160 eine Fortbewegungsmittels 1000, insbesondere den Zentralcomputer des Fahrzeugs, übergeben, der die Daten für weiterführende Aktionen wie die Warnung des Fahrers durch die Darstellung auf einer Anzeige oder sogar den direkten Eingriff ins Fahrverhalten verwenden kann.

In Fig. 3 ist eine Überlagerung aus dem berechneten Reibwertkoeffizienten-Netz 10 und der Oberfläche 20 dargestellt. Fig. 3 zeigt verschiedene Bereiche, die jeweils einem Reibwert entsprechen. Die Vorrichtung 100 ermittelt für die mit Wasser gefüllten Spurrinnen stark reduzierte Reibwerte auf Basis der Absorptions- und Polarisationsinformationen. Die Vorrichtung 100 kann dazu genutzt werden,

Reibwerte der Oberfläche 20 basierend auf den erfassten Polarisations- und/oder Absorptionswerten zu berechnen. Zusätzlich handelt es sich nicht nur um eine Punktmessung oder einen Mittelwert des Oberflächenzustands, sondern um ein bildgebendes Verfahren, das zur Lokalisierung von Bereichen mit stark reduzierten Reibwerten eingesetzt werden kann, um dadurch dynamische auf glatte Bereiche auf der Fahrbahn reagieren zu können.

Die mindestens ein Gruppe an Pixel 31 umfasst bevorzugt eine Mehrzahl an Gruppen von Pixeln 31, welche hinsichtlich ihrer Auswertung in Bezug der Reibwert-Koeffizienten gruppiert werden können.

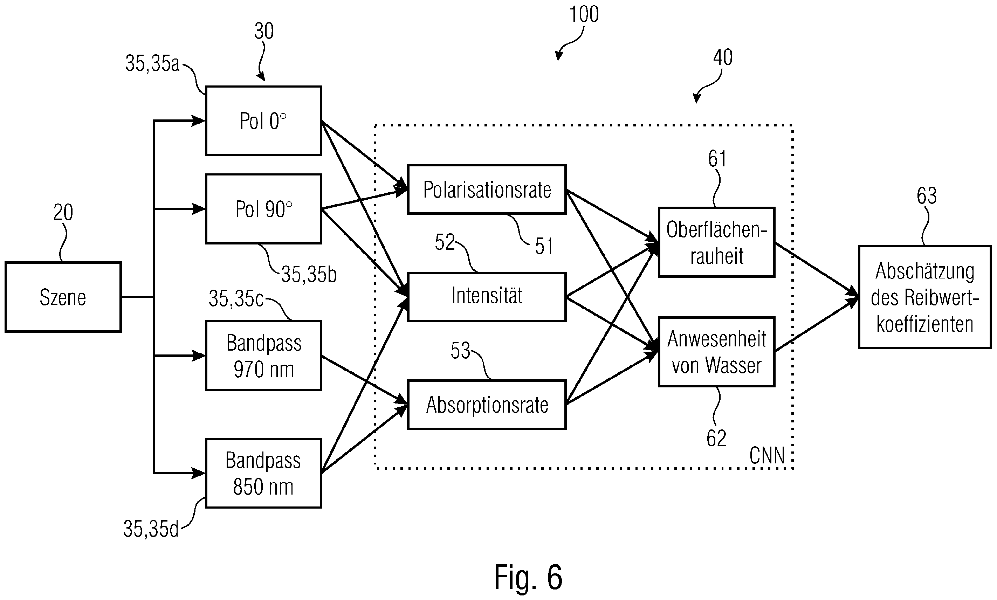

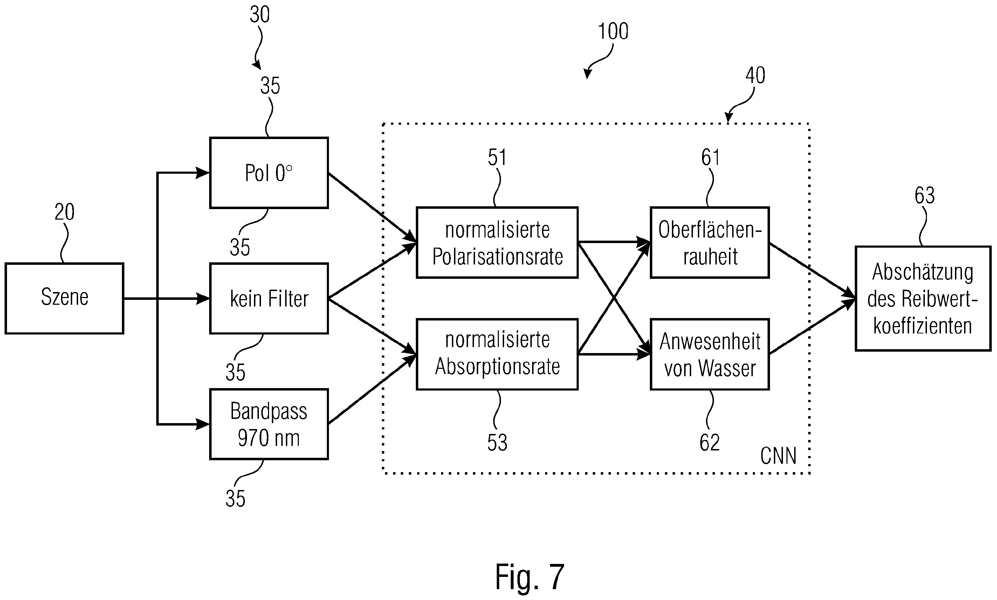

Die mindestens eine Gruppe von Pixeln 31 umfasst mindestens eine Information zu einer von der Oberfläche 20 reflektierten Lichtintensität 52. Die Information zur Lichtintensität kann dann mittels der Bestimmungseinheit 40 zur weiteren Auswertung genutzt werden (siehe Fig. 6). Insbesondere umfasst die mindestens eine Information eine Information zu einer spektralen Verteilung des reflektierten Lichts, wie beispielsweise einer Absorptionsrate 53,insbesondere welche definiert ist als das Verhältnis der Lichtintensitäten in zwei verschiedenen Wellenlängenbereichen, und/oder eine Polarisationsinformation, wie beispielsweise eine Polarisationsrate 51, insbesondere welche definiert ist als das Verhältnis der Lichtintensitäten in zwei verschiedenen Polarisationsebenen, des reflektierten Lichts und/oder eine Information zu einer Intensität 52 (der Lichtintensität) des reflektierten Lichts. Durch Auswertung dieser Information kann beispielsweise ein Rückschluss auf eine Oberflächenrauheit 61 und/oder eine Anwesenheit von Wasser 62 auf der Oberfläche 20 ermittelt werden. Schließlich können hieraus Abschätzungen 63 der Reibwertkoeffizienten erfolgen, welche schließlich das Reibwertkoeffizienten-Netz 10 bilden (siehe Fig. 7).

Die Erfassungseinrichtung 30 weist einen Sensor 35 auf, der in einer der folgenden Ausführungsformen ausgestaltet ist:
a. als ein Teilsensor, der zum Erfassen von p-polarisiertem Licht ausgelegt ist; oder
b. wie a), jedoch mit zusätzlichem Teilsensor, der zum Erfassen von s-polarisiertem Licht ausgelegt ist; oder
c. wie b), jedoch mit zusätzlichem Teilsensor, der zum Erfassen von Licht in einer weiteren Polarisationsebene, insbesondere eine 45° Ebene, die weder p-noch s-Polarisation entspricht, ausgelegt ist; oder
d. wie a), jedoch mit zusätzlichem Teilsensor, der keine bevorzugte Polarisationsebene aufweist.

Die Figs. 4, 5, 6 und 7 zeigen jeweils Polarisationsfilter 35 mit Grad-Angaben. Im Fachterminus gewöhnlicher ist es, von p-polarisierten (p für parallel also 0° pol) und s-polarisiertem (s für senkrecht also 90° pol) Licht zu sprechen. Hierbei ist das p-polarisierte Licht das wichtigere und das s-polarisierte Licht kann alternativ mit der ungefilterten Aufnahme ersetzt werden. Bei einem 45° Polarisationsfilter ist die Winkelhalbierende, die zusätzlich zu den anderen zwei Achsen verwendet wird, um eine Drehung der Polachsen zu erkennen. Durch Verwendung eines 45° Polarisationsfilters können weitere Informationen zur Verfügung gestellt werden.

Die Topographie und das Material beeinflussen das Polarisationsverhalten. Dies wird ausgenutzt, um mit Hilfe der erfassten Polarisationsinformation im Umkehrschluss die Rauigkeit der Oberfläche zu schätzen. Da Wasser und dessen Aggregatszustände die Reibungskoeffizienten sowie das optische Verhalten der Oberfläche 20 deutlich verändern können, werden die Größen Oberflächenrauheit 61 und die Anwesenheit von Wasser 62 bestimmt (siehe Fig. 6).

Alternativ oder zusätzlich weist die Erfassungseinrichtung 30 einen Sensor 35 auf, der in einer der folgenden Ausführungsformen ausgestaltet ist:
a. als ein Teilsensor, der zum Erfassen eines Wellenlängenbereichs eines Absorptionsmaximums von Wasser oder dessen Aggregatzuständen ausgelegt ist. Insbesondere umfasst der erfasste Wellenlängenbereich 980 nm, 1190nm und/oder 1450 nm,; oder
b. wie a), jedoch mit zusätzlichem Teilsensor, der zum Erfassen eines Wellenlängenbereichs außerhalb der Absorptionsmaxima von Wasser ausgelegt ist; oder
c. wie a), jedoch mit zusätzlichem Teilsensor ohne eingeschränkten Wellenlängenbereich.

Der vorgeschlagene Sensor 35 kann insbesondere derart ausgebildet sein, dass ein Aspekt des aktuellen Aggregatzustandes des Wassers auf der Oberfläche 20 erfasst werden kann, um hieraus einen Rückschluss auf den aktuellen oder die Reibwertkoeffizienten der Oberfläche 20 ziehen zu können.

In den Figs. 4 bis 7 ist zu sehen, dass die Erfassungseinrichtung 30 mit der Bestimmungseinheit 40 gekoppelt ist. Die Bestimmungseinheit 40 ist dazu ausgebildet, den Bereich der Oberfläche 20 aus der mindestens einen Gruppe von Pixeln 31 durch Bilderkennung zu bestimmen. Bevorzugt können mehre Gruppen an Pixeln 31 erfasst werden, welche jeweils mittels Bilderkennung einen, insbesondere anderen, Bereich der Oberfläche 20 wiedergeben. Die verschiedenen Gruppen von Pixeln 31 können zu einem Bild von Pixeln 31 zusammengesetzt werden, um den Bereich der Oberfläche 20 widerzugeben. Der Bereich der Oberfläche ist ein Bereich, welcher von dem Sensor 35, insbesondere mit all seinen Teilsensoren, erfasst worden ist.

Optional kann die Vorrichtung eine Signalverarbeitungsvorrichtung 45 zwischen der Erfassungseinrichtung 30 und der Bestimmungseinheit 40 umfassen, um eine Vorverarbeitung der Signale durchzuführen. In den Figs. 4 und 5 ist die optionale Signalverarbeitungsvorrichtung 45 durch gestrichelte Linien angedeutet. Durch Vorverarbeitung der Signale kann die Bestimmungseinheit 40, welche die vorverarbeiteten Signal von der Signalverarbeitungsvorrichtung 45 würde, schneller bearbeiten, als wenn die erfassten Signal von der Erfassungseinrichtung 30 direkt der Bestimmungseinheit 40 übergeben werden würden. Die Signalverarbeitungsvorrichtung 45 kann als ein Algorithmus auf einer Prozessoreinheit oder einer spezialisierten Elektronik wie etwa einem ASIC oder FPGA ausgebildet sein.

Den Figs. 4 bis 7 ist zu entnehmen, dass in der vorgeschlagenen Vorrichtung 100 Polarisationsfilter Pol *0*°(p-polarisation), Pol 90°(s-polarisation) und ein Bandpass BP 970 nm verwendet werden und die "Intensität", die als Helligkeitsreferenz benötigt wird, aus dem Mittelwert von Pol *0*° und Pol 90° berechnet wird.

Sofern die Signalverarbeitungsvorrichtung 45 vorhanden ist, ist diese dazu ausgebildet, eine Vorverarbeitung der Daten durchzuführen, insbesondere wobei die Vorverarbeitung Folgendes umfasst:
a. eine Normalisierung von Sensorinformation mit der Intensität (52), und/oder
b. eine Berechnung eines Polarisationsgrades durch Vergleich von p-polarisiertem und s-polarisiertem Licht, und/oder
c. eine Berechnung eines Absorptionsverhaltens durch Vergleich von verschiedenen Spektren des reflektierten Lichts.

Vorliegend werden die Begriffe Daten und Signal synonym zueinander verwendet. Mit dem Begriff Intensität ist vorliegend eine Lichtintensität gemeint.

Die Bestimmungseinheit 40 oder die Signalverarbeitungsvorrichtung 45 weist eine Schnittstelle zum Empfangen der mindestens einen Gruppe von Pixeln 31 von einem externen Sensor 50 auf oder zum Empfangen bekannter Daten, insbesondere aus einer Datenbank wie einer Cloud oder ähnlichem. Der externe Sensor 50 ist daher dazu ausgebildet, mit der Bestimmungseinheit 40 oder mit der Signalverarbeitungsvorrichtung 45 zu kommunizieren. Ferner sind Bestimmungseinheit 40 oder die Signalverarbeitungsvorrichtung 45 jeweils dazu ausgebildet, mit dem externen Sensor 50 zu kommunizieren, insbesondere um aktuell erfasste Daten oder bekannte Daten in Bezug zu einem Aggregatzustand des Wassers auf der Oberfläche 20 abzufragen.

Die Bestimmungseinheit 40 ist dazu ausgebildet, den bestimmten Bereich in Segmente 61, 62, 63, 64 bestehend aus einem oder mehreren Pixeln zu unterteilen, um pro Segment 61, 62, 63, 64 einen Reibwertkoeffizienten-Wert zu bestimmen. In Fig. 4 und 5 sind beispielsweise die Segmente 61, 62, 63, 64, die jeweils einen einzigen Reibwertkoeffizienten-Wert graphisch dargestellt. Die Segmente 61, 62, 63, 64 können von ihrer Größe her der Größe der jeweils mindestens einen Gruppe an Pixeln 31 entsprechen.

Fig. 4 zeigt beispielsweise ein Ausführungsbeispiel der Vorrichtung 100 basierend auf Kamera-Inputs, um mindestens einen Gruppe an Pixeln 31 zu erfassen. Das neuronale Netz, insbesondere ein Convolutional Neural Network(CNN)-Block, kann als Blackbox betrachtet werden, die das beste Verfahren zur Berechnung bzw. Schätzung der Reibwerte durch Trainingsdaten erlernt.

Wie bereits beschrieben, kann der Prozess alternativ durch Datenaufbereitung unterstützt werden, indem die Signalverarbeitungsvorrichtung 45 der Bestimmungseinheit 40 vorgeschalten ist. So können bereits direkt die Polarisationsrate 51, dielntensität 52 und die Absorptionsrate 53 berechnet werden, um die Eingangsgrößen zu reduzieren. Der eigentliche Grund, warum diese Größen besonders gut für die Klassifikation des Oberflächenzustands und die Berechnung bzw. Schätzung des Reibwerts geeignet sind, ist die Tatsache, dass die Polarisation besonders gut zur Bestimmung der Oberflächenrauigkeit und die Absorption, insbesondere bei 970nm oder anderen Absorptionspeaks von Wasser, für die Erkennung von Wasser in allen Aggregatzuständen geeignet ist.

Die Signalverarbeitungsvorrichtung 45 berechnet nicht die Reibwerte-Koeffizienten, sondern vorverarbeitet lediglich die erfassten Signale. Also etwa die Polarisationsrate 51 oder Absorptionsrate 53 aus den Intensitäten der verschiedenen Sensoren 35a, 35b, 35c, 35d zu berechnen, um diese dann als eine kombinierte Gruppe von Pixeln an die Bestimmungseinheit 40 weiterzugeben. Sofern keine Signalverarbeitungsvorrichtung 45 vorhanden ist, übernimmt die Bestimmungseinheit all diese Aufgaben, wie die in Fig. 6 gezeigt ist. Bevorzugt wird eine erfasste mindestens einen Gruppe an Pixeln 31 zu einem Segment 61, 62, 63, 64 zusammengefasst.

Die Bestimmungseinheit 40 ist dazu ausgebildet, aus den Reibwertkoeffizienten-Werten Haftgrenzwerte 101 (siehe Figs. 2 und 3) zu bestimmen, welche verschiedenen Positionen in dem Bereich zugeordnet sind, um ein Haftgrenzwerte-Netz in dem Bereich zu bestimmen, wobei der Haftgrenzwert 101 eine maximal übertragbare Reibkraft angibt. In Fig. 2 beispielsweise sind die Haftgrenzwerte durch die Maxima der in Fig. 2 dargestellten Kurven gegeben. In Fig. 3 sind die die verschiedenen Haftgrenzwerte 101 als ein Haftgrenzwerte-Netz zu sehen, welches der Oberfläche 20 überlagert ist. Fig. 3 zeigt das Haftgrenzwerte-Netz in einer Falschfarbendarstellung.

Die Bestimmungseinheit 40 ist dazu ausgebildet, Referenzwerte in Abhängigkeit äußerer Umgebungsbedingungen und/oder der wirkenden Normalkraft zu speichern, um die Haftgrenzwerte 101 bei einem erneuten Erfassen der mindestens einen Gruppe von Pixeln 31 zu bestimmen. Alternativ oder zusätzlich ist die Bestimmungseinheit 40 dazu ausgebildet, Daten aus einer in-situ Messung zu empfangen, um in-situ die Reibwertkoeffizienten-Werte und/oder Haftgrenzwerte 10 in dem Bereich zu bestimmen, um die in-situ bestimmten Werte zu speichern. Die in-situ bestimmten Werte können gespeichert werden, um nachfolgend als Referenzwerte abrufbar zu sein. Insbesondere können in-situ bestimmte Daten und daraus bestimmte Werte durch die Bestimmungseinheit 40 gespeichert werden, um als Referenzwert für ein zukünftiges Ereignis zu dienen.

Eine in-situ Messung kann beispielsweise sein: kontaktbasierte Messung und/oder eine laserbasierte Messung und/oder eine LIDAR basierte Messung und/oder eine RADAR basiert Messung und/oder in einer Cloud hinterlegte und abgefragte Messdaten umfasst. Hierzu können mit der Vorrichtung 100 unterschiedliche Sensoren 35 oder Messvorrichtungen in Kommunikationsverbindung stehen. Insbesondere kann eine zur Vorrichtung 100 assoziierte Steuerung eine in-situ Messung initialisieren.

Die Signalverarbeitungsvorrichtung 45 und die Bestimmungseinheit 40 sind voneinander getrennt ausgebildet, oder die Bestimmungseinheit 40 umfasst die Signalverarbeitungsvorrichtung 45, oder wie bereits angemerkt, gibt es keine Signalverarbeitungsvorrichtung 45 und die Bestimmungseinheit 40 übernimmt die Funktionen der Signalverarbeitungsvorrichtung 45. In Abhängigkeit der Arbeitsleistung der Bestimmungseinheit 40 kann die Signalverarbeitungsvorrichtung 45 sinnvoll oder nicht notwendig sein.

Jedenfalls ist die Bestimmungseinheit 40 zum Bestimmen von Reibwertkoeffizienten-Werten dazu ausgebildet ist, eine mathematische Berechnung durchzuführen oder die Bestimmung auf Basis künstlicher Intelligenz, insbesondere einem convolutional neuronalen Netz (CNN), durchzuführen. Insbesondere ist die Bestimmungseinheit 40 ein Prozessor oder ein spezialisierter Hardware, oft Al-Beschleuniger benannt, wie GPUs, TPUs, ASICs oder FPGAs..

Die Bestimmungseinheit 40 ist dazu ausgebildet, zu einem Punkt in dem Bereich als ersten Wert eine Polarisationsrate 51 und/oder eine Lichtintensität 52 und/oder eine Absorptionsrate 53 zu berechnen, um damit den Reibwertkoeffizienten zu dem Punkt zu ermitteln. Hierbei ist eine Punktposition durch ein Segment 61, 62, 63, 64 definiert. Mit anderen Worten, ein einziges Segment 61, 62, 63, 64 definiert welche Daten aus welcher Gruppe von Pixeln 31 zur Berechnung des Reibwertkoeffizienten in dem Segment genutzt werden.

Die Bestimmungseinheit 40 ist dazu ausgebildet, von den Teilsensoren 35a, 35b, 35c, 35d erfasste Daten an einem Ausgang, welcher mit keinem Filter und/oder keinem Bandpassfilter und/oder mit einem der Filter und/oder mit einem der Bandpassfilter gekoppelt ist, zu empfangen, um die Polarisationsrate 51 und/oder die Lichtintensität 52 und/oder die Absorptionsrate 53 zu berechnen (siehe Fig. 6). Mit Hilfe der Teilsensoren 35a, 35b, 35c, 35d können Polarisationsdaten und/oder Absorptionsbereiche und/oder bestimmte Wellenlängenbereiche erfasst werden, welche hinsichtlich eines der Aggregatzustände von Wasser von Interesse sind.

Ein Bandpassfilter kurz Bandpass reflektiert oder absorbiert Licht außerhalb des spezifizierten Wellenlängenbereichs auch Band genannt, insbesondere das Licht von etwa 400-950nm sollte für diese Anwendung geblockt werden, da Licht in diesem Wellenlängenbereich die relevante Information bei 970-980nm deutlich überschatten würde Der Bandpass lässt Licht in einem Band passieren mit einer fixen Halbwertsbandbreite (Fachwort: FWHM=Full Width-Half Max) und einer fixen zentralen Wellenlänge (Fachwort CWL=Central Wave Length). Zum Beispiel wäre ein Bandpassfilter mit CWL 980nm und 50nm FWHM ein Filter, der Licht zwischen 955nm und 1005nm (980nm ± 25nm => 50nm Breite) durchlässt. Der hier verwendete Bandpass ist so ausgelegt, um nur das Licht beim bekannten Absorptionspeak von Wasser bei etwa 980nm durchzulassen. Es gibt noch weitere Absorptionspeaks von Wasser bei ca. 1190nm und 1450nm. Entsprechende Bandpassfilter sind dann anlog zu dem soeben beschriebenen ausgelegt. Bevorzugt werden Bandpassfilter verwendet, die Licht nahe der Absorptionspeaks von Waser durchlassen.

Die Bestimmungseinheit 40 ist dazu ausgebildet, die mindestens eine Gruppe von Pixeln 31 mit einer Referenzgruppe von Pixeln zu vergleichen. Die Referenzgruppe von Pixeln kann in der Bestimmungseinheit 40 gespeichert sein. Die Referenzgruppe von Pixeln kann aus einer zuvor erfassten mindestens eine Gruppe von Pixeln 31 oder aus mehreren Gruppen von Pixeln 31 bestehen, welche zeitlich zuvor erfasst und in der Bestimmungseinheit 40 als Referenzgruppe von Pixeln gespeichert wurde(n). Die Quelle der Referenz gruppe kann unterschiedlich sein. Die Quelle der Referenzgruppe könnte eine Absorption mit anderer Wellenlänge, eine Polarisation in einer anderen Ebene, oder ein ungefiltertes Bild (Gruppe von Pixel) sein.

Beispielsweise kann die Signalverarbeitungsvorrichtung 45 oder die Bestimmungseinheit 40 dazu ausgebildet sein, einen Mittelwert einer der zuvor bestimmten Größen oder ähnliche aggregierende Verfahren auf die jeweiligen Segmente 61, 62, 63, 64 der Gruppen von Pixeln 31 anzuwenden, um einen weiteren Wert von Interesse assoziiert mit dem entsprechenden Segment 61, 62, 63, 64 zu erhalten.

Beispielsweise ist die Vorrichtung dazu ausgebildet, nach einem Erlernen der Bestimmung der Haftwerte die Haftwerte auf Basis der gespeicherten Referenzwerte in-situ nach einem erneuten Erfassen der mindestens einen Gruppe von Pixeln 31 oder nach erneuten Erfassen der mindestens einen Gruppe von Pixeln 31 und der zum zweiten Mal erfassten mindestens einen Gruppe von Pixeln 31 zu bestimmen. Es ist möglich, dass die mindestens einen Gruppe von Pixeln 31 mehrfach, insbesondere also zweimal, dreimal... n-mal, wobei n eine natürliche Zahl ist, zeitlich hintereinander erfasst werden, um daraus die hierin genannten Größen zu bestimmen und abzuleiten. Die mindestens eine Gruppe von Pixeln 31 kann dabei dieselbe Anzahl an Pixeln an derselben Stelle der Oberfläche, oder dieselbe Anzahl an Pixeln an einer verschiedenen Stelle der Oberfläche oder eine verschiedene Anzahl an Pixeln an derselben Stelle der Oberfläche 20 aufweisen. Mit anderen Worten, die Auflösung der mindestens einen Gruppe von Pixeln 31 kann konstant sein oder variieren an ein und derselben Stelle der Oberfläche 20oder die Auflösung der mindestens einen Gruppe von Pixeln 31 ist zwar konstant, aber die Stelle der Oberfläche 20, welche erfasst wird ist verändert.

Die mindestens eine Gruppe von Pixeln 31 und eine zum zweiten Mal erfasste mindestens eine Gruppe von Pixeln 31 sind bevorzugt hinsichtlich der Position oder der Anzahl und Position der Pixel identisch, jedoch ist die mindestens eine Gruppe von Pixeln 31 ein erstes Mal mit keinem Filter oder unterschiedlichen Filtern und/oder Bandpässen oder keinem Bandpass erfasst. Mit anderen Worten die mindestens eine Gruppe von Pixeln 31 wird mit unterschiedlichen Teilsensoren 35a, 35b,35c, 35d des Sensors 25 erfasst als die die mindestens eine Gruppe von Pixeln 31, welche ein zweites Mal erfasst wird.

Die Bestimmungseinheit 40 ist dazu ausgebildet, das Reibwertkoeffizienten-Netz 10 in verschiedene Teilbereiche zu unterteilen, wobei jeder Teilbereich einem einzigen bestimmten Reibwertkoeffizienten zugeordnet ist, insbesondere wobei die Vorrichtung dazu ausgebildet ist, die verschiedenen Teilbereiche in einer Falschfarbdarstellung visuell wiederzugeben. Fig. 3 zeigt beispielsweise eine Falschfarbdarstellung bei dem die unterschiedlichen bestimmten Haftgrenzwerte 101 der Oberfläche 20, einer Fahrbahnoberfläche, überlagert sind. In Fig. 3 ist zu sehen, dass bei einem normalisierten Wert von 1 eine maximaler Haftgrenzwert 101 durch ein auf der Oberfläche 20 fahrendes Objekt erreicht ist, während in Bereichen, in dem der normalisierte Haftgrenzwert 0,1 beträgt, das sich auf der Oberfläche 20 bewegende Objekt in eine Gleitbewegung überzugehen droht, da der Haftgrenzwert 101 nicht maximal ist.

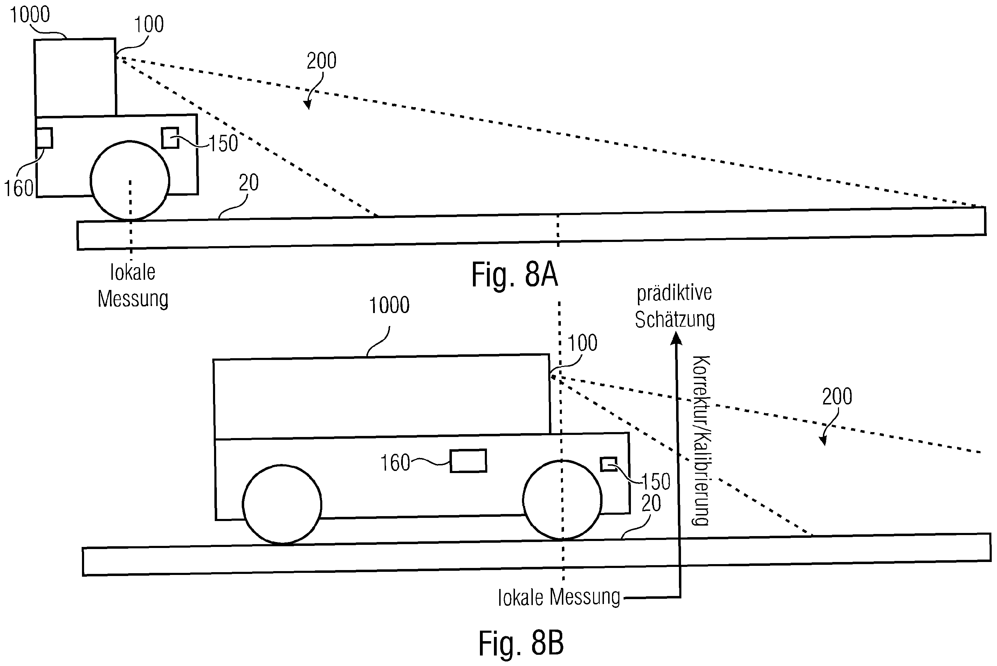

Ein weiterer Aspekt der vorliegenden Erfindung betrifft ein Fortbewegungsmittel 1000 mit der hierin beschriebenen Vorrichtung 100, wobei das Fortbewegungsmittel 1000 einen zusätzlichen Sensor 150 umfasst, der ausgebildet ist, um der Bestimmungseinheit 40 Informationen bezüglich mindestens eines Referenzwertes und/oder Informationen bezüglich einer Bewegung des Fortbewegungsmittel 1000 zu liefern. Ein Fortbewegungsmittel 1000 ist in Figs. 8a, 8b zu sehen. Die Bestimmungseinheit 40 ist dazu ausgebildet, die Reibungskoeffizienten der Oberfläche 20 zu bestimmen. Wenn das Fortbewegungsmittel 1000 beschleunigt oder bremst, dann geht es in die Gleitbewegung über, d.h. fängt an zu rutschen, wenn die für die Bremsung oder Beschleunigung verwendete Kraft höher als die Haftgrenze 101 ist. Daher ist die Bestimmungseinheit 40 dazu ausgebildet, um eine Steuerung 160 des Fortbewegungsmittels 1000 zu beeinflussen, falls die Bestimmungseinheit 40 Haftgrenzen 101 anhand der berechneten Reibungskoeffizienten bestimmt, welche unterhalb der verwendeten Brems- oder Beschleunigungskraft liegen, was einen Übergang des Fortbewegungsmittels 1000 in eine Gleitbewegung bedeuten würde. Falls das Fortbewegungsmittels 1000 in eine Gleitbewegung überzugehen scheint, ist die Steuerung 160 beispielsweise dazu ausgebildet, eine Geschwindigkeit des Fortbewegungsmittels 100 weniger stark zu reduzieren. Denn um die Geschwindigkeit zu reduzieren, muss gebremst werden. D.h. die Bremskraft muss erhöht werden. Wenn die Kraft, die für den Bremsvorgang verwendet wird, sich bereits an der Haftgrenze befindet, würde eine weitere Erhöhung der Bremskraft zwangläufig zum Rutschen führen. Genau das soll durch die vorschlagende Vorrichtung 100 jedoch vermieden werden. Deshalb bewirkt die Steuerung 160 auf Basis einer Kommunikation mit der Vorrichtung 100, dass das Fortbewegungsmittel 100 weniger stark gebremst wird, wenn das Fortbewegungsmittel 100 in eine Gleitbewegung überzugehen scheint. Denn durch ein weniger starkes Bremsen kann der Bremsweg verringert werden, wenn dadurch die Gleitbewegung verhindert wird. Die Steuerung würde also die Brems-/Beschleunigungskraft begrenzen, um ein durchrutschen zu verhindern. Die Steuerung 160 ist bevorzugt mit der Vorrichtung 100 in Kommunikationskontakt, derart, dass die Vorrichtung 100 mit der Steuerung kommunizieren kann und andersherum. Die Kommunikation zwischen der Vorrichtung 100 und der Steuerung 160 kann bidirektional ausgebildet sein. Wie in Figs. 8a, 8b zu sehen ist, weist das Fortbewegungsmittel 1000 ein Blickfeld 200 auf, welches durch die Vorrichtung 100 stetig oder in vorbestimmten Zeitabständen abgetastet wird, um die Haftgrenzwerte 101 durch die Bestimmungseinheit 40 bestimmen zu lassen.

Die Bestimmungseinheit 40 kann über GPS mit einer Cloud oder einem Server kommunizieren, um aktuelle Wetterdaten anzufragen. Die Bestimmungseinheit 40 kann dazu ausgebildet sein, Referenzwerte in Abhängigkeit äußerer Umgebungsbedingungen und/oder der wirkenden Normalkraft eine Fortbewegungsmittels 1000 zu speichern, um die Haftgrenzwerte bei einem erneuten Erfassen der mindestens einen Gruppe von Pixeln oder bei einem erneuten Erfassen der mindestens einen Gruppe von Pixeln und der zum zweiten Mal erneut erfassten mindestens einen Gruppe von Pixeln zu bestimmen. Die auf die Oberfläche 20 wirkende Normalkraft ist abhängig von einem Eigengewicht des Fortbewegungsmittels 100 und dessen Beladung und der Steigung der Oberfläche 20, welche insbesondere eine Fahrbahnoberfläche sein kann.

Das Fortbewegungsmittel 1000 weist eine Schnittstelle auf, die ausgebildet ist, um einen Fahrer des Fortbewegungsmittels 100 zu alarmieren, wenn das Fortbewegungsmittel 1000 in eine Gleitbewegung überzugehen scheint. Die Schnittstelle kann eine LED-Anzeige umfassen, welche zu leuchten beginnt, wenn das Fortbewegungsmittel in eine Gleitbewegung überzugehen droht. Die Schnittstelle kann eine Anzeige aufweisen, auf der dem Fahrer des Fortbewegungsmittel 1000 beispielswese eine Falschfarbendarstellung, wie in Fig. 3 gezeigt, dargestellt wird.

Die Schnittstelle ist also dazu ausgebildet, dem Fahrer das Reibwertkoeffizienten-Netz 10 mit seinen verschiedenen Segmenten 61, 62, 63, 64 als ein Bild 70 in einer Falschfarbdarstellung visuell widerzugeben. Das Reibwertkoeffizienten-Netz wird auf Basis sichtbarer und überwiegend nicht sichtbarer erfasster Wellenlängen erstellt, welche für den Fahrer in ein Falschfarbenbild im sichtbaren Wellenlängenbereich umgewandelt wird. Bei der Falschfarbendarstellung geht es darum, dass die Farben nicht für Licht/Wellenlängen/Farben stehen, sondern eine andere Information, insbesondere die Haftgrenzen 101 und/oder Reibungswerte des Reibwertkoeffizienten-Netzes 10, darstellen.

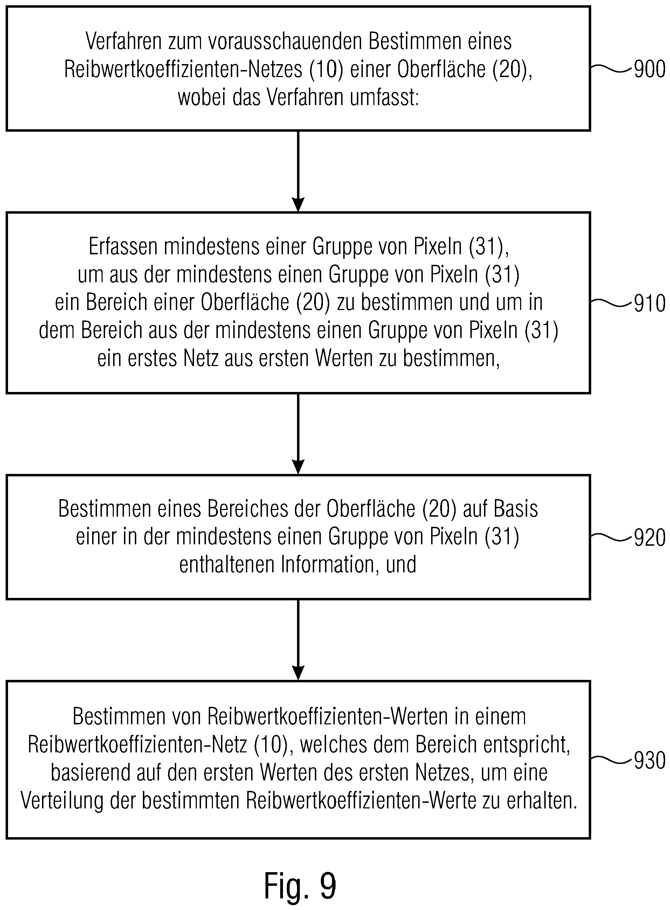

Ein weiterer Aspekt der vorliegenden Erfindung betrifft ein Verfahren 900 zum vorausschauenden Bestimmen eines Reibwertkoeffizienten-Netzes 10 einer Oberfläche 20. Das Verfahren 900 umfasst in Schritt 910 ein Erfassen mindestens einer Gruppe von Pixeln 31, um aus der mindestens einen Gruppe von Pixeln 31 einen Bereich einer Oberfläche 20 zu bestimmen und um in dem Bereich aus der mindestens einen Gruppe von Pixeln 31 ein erstes Netz aus ersten Werten zu bestimmen. Ferner umfasst das Verfahren 900 in Schritt 920 ein Bestimmen eines Bereiches der Oberfläche 20 auf Basis einer in der mindestens einen Gruppe von Pixeln 31 enthaltenen Information, und in Schritt 930 ein Bestimmen von Reibwertkoeffizienten-Werten in einem Reibwertkoeffizienten-Netz 10, welches dem Bereich entspricht, basierend auf den ersten Werten des ersten Netzes, um eine Verteilung der bestimmten Reibwertkoeffizienten-Werte zu erhalten. Die Schritte 910, 920 und 930 werden in dieser Reihenfolge durchgeführt. Fig. 9 zeigt ein Ablaufschema des vorgeschlagenen Verfahrens 900.

Das Verfahren 900 kann auch zum Kalibrieren des Verfahrens 900 eingesetzt werden, wobei das Verfahren 900 dann ein Erhalten von Daten aus einer in-situ Messung umfasst, um aus den zuvor bestimmten Reibwertkoeffizienten-Werten Haftgrenzwerte 101 in dem Bereich zu bestimmen, und ein Speichern der bestimmten Haftgrenzwerte 101 als Referenzwerte. Beispielsweise können in-situ bestimmte Haftgrenzwerte 101 als Referenzwert mit Bezug auf die Umgebungsbedingungen, aus Basis welcher die Haftgrenzwerte 101 bestimmt worden sind, in der Bestimmungseinheit 40, insbesondere in dem neuronalen Netz, hinterlegt werden. Die Bestimmungseinheit 40 kann dazu ausgebildet sein, Daten aus einer in-situ Messung zu empfangen, um in-situ die Reibwertkoeffizienten-Werte und/oder in-situ die Haftgrenzwerte 101 in dem Bereich zu bestimmen, wobei die Bestimmungseinheit 40 dazu ausgebildet ist, die in-situ bestimmten Reibwertkoeffizienten-Werte und/oder die Haftgrenzwerte 101 zu speichern. In situ bestimmte Haftgrenzwerte 101 können als Referenzwert mit Bezug auf die Umgebungsbedingungen, auf Basis welcher sie erfasst worden sind, im neuronalen Netz hinterlegt werden. Hierdurch kann die Vorrichtung 100 kalibriert werden.

Ein weiterer Aspekt der vorliegenden Erfindung betrifft ein Computerprogramm zur Durchführung des hierin beschriebenen Verfahrens, wenn das Computerprogramm auf einem Rechner abläuft.

Bei der hierin beschriebenen Erfassung der mindestens einen Gruppe von Pixeln 31 können Kameras mit Absorptions- und Polarisationsfiltern verwendet werden, die das spezifische Absorptionsverhalten von Wasser und die Rauheit der Oberfläche erfassen können, um zwischen den Zuständen trocken, nass, Wasser, Eis und Blitzeis zu unterscheiden. Wie in Fig. 2 zu sehen ist, ist die Kenntnis des Oberflächenzustandes bzw. des Straßenzustands elementar für die Schätzung des Reibwerts. Anstatt die vorgeschlagene Vorrichtung nur zur Klassifikation des Oberflächenzustandes bzw. des Straßenzustands zu nutzen, ist vorliegend vorgeschlagen, ein neuronales Netz zu nutzen, um direkt einen Reibwertkoeffizienten für jeden Punkt auf der Fahrbahn im Voraus zu bestimmen oder zu schätzen.

Wenn eine lokale Messung bzw. eine in-situ Messung zu einem Bereich vorliegt, der vorher optisch erfasst wurde, kann die Messung als absolute Referenz verwendet werden. Gängige lokale Messungen benötigen typischerweise ein Rutschen ("Slip") durch Beschleunigung oder ähnliche dynamische Bewegung, um den Reibwert zu schätzen. Daher sind die Messungen ereignisbedingt und nicht jederzeit verfügbar. In der vorgeschlagenen Vorrichtung bzw. In dem vorgeschlagenen Verfahren dienen die lokalen bzw. in-situ Messungen nur als Korrekturwert für die jederzeit verfügbare vorausschauende Reibwertberechnung bzw. Reibwertschätzung. Es ist möglich, die Vorrichtung 100 komplett ohne in-situ Messung für Korrektur/Kalibrierung zu betreiben.

Mit der vorgeschlagenen Vorrichtung 100 und dem vorgeschlagenen Verfahren 900 können die Reibwerte vorausschauend bestimmt und lokalisiert werden. Wenn die Werte der Oberfläche bzw. der Fahrbahn bekannt sind, kann eine ideale Bremsung im Voraus geplant werden. Das heißt, das Rutschen der Räder kann komplett verhindert werden, wenn die Bremskraft immer auf die maximale Reibkraft begrenzt wird. Die daraus resultierende Bremsleistung ist deutlich höher als mit einem ABS erreichbar. Eventuell könnte das ABS sogar komplett ersetzt werden. Auch beim Anfahren funktioniert das System: Die Leistung kann automatisch begrenzt werden, um ein Durchdrehen der Räder zu verhindern.

Jegliches, Rutschen (Slip) verringert nicht nurdie Effizienz, sondern erhöht auch den Reifenabrieb, was sich auf Kosten und Umweltbelastung auswirkt.

Es können auch andere Filter als hier beschrieben verwendet werden, um ähnliche Ergebnisse zu erzielen. Es ist anzunehmen, dass es eine unbegrenzte Anzahl an ML-Modellen geben wird, die ein ähnliches Ergebnis erzielen können.

Mit der vorgeschlagenen Vorrichtung 100 und dem vorgeschlagenen Verfahren 900 können beispielsweise in den Anwendungsgebieten Automotive, Fernverkehr, oder Flugverkehr angewendet werden. Die gesteigerte Effizienz und die gesteigerte Bremsleistung in Gefahrensituationen machen die Vorrichtung 100 und das Verfahren 900 zu einem nützlichen Werkzeugt für jedes Fortbewegungsmittel 1000.

Autonom fahrende Fahrzeuge werden die Vorrichtung 100 und das Verfahren 900 besonders effektiv nutzen können, da diese alle Aktionen im Voraus auf einer internen Karte planen. Die zusätzliche Information kann die Aktionsplanung noch verbessern.

Obwohl manche Aspekte im Zusammenhang mit einer Vorrichtung bzw. einem Verfahren beschrieben wurden, versteht es sich, dass diese Aspekte auch eine Beschreibung eines entsprechenden Verfahrens bzw. einer Vorrichtung darstellen, sodass ein Block oder ein Bauelement einer Vorrichtung bzw. eines Systems auch als ein entsprechender Verfahrensschritt oder als ein Merkmal eines Verfahrensschrittes zu verstehen ist und anders herum. Auf eine vollständige Darstellung der vorliegenden Erfindung in Form von Verfahrensschritten bzw. in Form von Vorrichtungsmerkmalen wird vorliegend aus Redundanzgründen abgesehen.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn, es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

## Patentansprüche

1. Vorrichtung (100) zum vorausschauenden Bestimmen eines Reibwertkoeffizienten-Netzes (10) einer Oberfläche (20), mit folgenden Merkmalen:
einer Erfassungseinrichtung (30) zum Erfassen mindestens einer Gruppe von Pixeln (31), welche die Oberfläche (20) wenigstens teilweise wiedergeben, um in einem Bereich der erfassten Oberfläche (20) aus der mindestens einen Gruppe von Pixeln (31) ein erstes Netz aus ersten Werten zu bestimmen, wobei das erste Netz dem Bereich überlagert ist, und
eine Bestimmungseinheit (40) zum Bestimmen von Reibwertkoeffizienten-Werten, welche das Reibwertkoeffizienten-Netz (10) bilden basierend auf den ersten Werten des ersten Netzes, wobei das Reibwertkoeffizienten-Netz (10) eine Verteilung der bestimmten Reibwertkoeffizienten-Werte darstellt.

2. Vorrichtung (100) nach Anspruch 1 wobei die Bestimmungseinheit (40) dazu ausgebildet ist, die Verteilung der bestimmten Reibwertkoeffizienten-Werte dem Bereich der erfassten Oberfläche (20) zu überlagern und eine eindimensionale oder mehrdimensionale Verteilung zu bestimmen.

3. Vorrichtung (100) nach einem der Ansprüche 1 bis 2, wobei die mindestens eine Gruppe von Pixeln (31) mindestens eine Information zu einer von der Oberfläche (20) reflektierten Lichtintensität (52) umfasst, insbesondere:
a. eine Information zu einer spektralen Verteilung des reflektierten Lichts, und/oder
b. eine Polarisationsinformation des reflektierten Lichts und/oder
c. Information zu einer Intensität (52) des reflektierten Lichts.

4. Vorrichtung (100) nach einem der Ansprüche 1 bis 3, wobei die Erfassungseinrichtung (30) einen Sensor (35) aufweist, der in einer der folgenden Ausführungsformen ausgestaltet ist:
a. als ein Teilsensor, der zum Erfassen von p-polarisiertem Licht ausgelegt ist; oder
b. wie a), jedoch mit zusätzlichem Teilsensor, der zum Erfassen von s-polarisiertem Licht ausgelegt ist; oder
c. wie b), jedoch mit zusätzlichem Teilsensor, der zum Erfassen von Licht in einer weiteren Polarisationsebene, die weder p- noch s-Polarisation entspricht, ausgelegt ist; oder
d. wie a), jedoch mit zusätzlichem Teilsensor, der keine bevorzugte Polarisationsebene aufweist.

5. Vorrichtung (100) nach einem der Ansprüche 1 bis 4, wobei die Erfassungseinrichtung (30) einen Sensor (35) aufweist, der in einer der folgenden Ausführungsformen ausgestaltet ist:
a. als ein Teilsensor, der zum Erfassen eines Wellenlängenbereichs eines Absorptionsmaximums von Wasser oder dessen Aggregatzuständen ausgelegt ist; oder
b. wie a), jedoch mit zusätzlichem Teilsensor, der zum Erfassen eines Wellenlängenbereichs außerhalb der Absorptionsmaxima von Wasser ausgelegt ist; oder
c. wie a), jedoch mit zusätzlichem Teilsensor ohne eingeschränkten Wellenlängenbereich

6. Vorrichtung (100) nach einem der Ansprüche 1 bis 5, wobei die Erfassungseinrichtung (30) mit der Bestimmungseinheit (40) gekoppelt ist, und wobei die Bestimmungseinheit (40) dazu ausgebildet ist, den Bereich der Oberfläche (20) aus der mindestens einen Gruppe von Pixeln (31) durch Bilderkennung zu bestimmen.

7. Vorrichtung (100) nach einem der Ansprüche 1 bis 6, wobei eine Signalverarbeitungsvorrichtung (45) zwischen der Erfassungseinrichtung (30) und der Bestimmungseinheit (40) vorgesehen ist, um eine Vorverarbeitung der Signale durchzuführen.

8. Vorrichtung (100) nach Anspruch 7, wobei die Signalverarbeitungsvorrichtung (45) dazu ausgebildet ist, eine Vorverarbeitung der Daten durchzuführen, insbesondere wobei die Vorverarbeitung Folgendes umfasst:
a. eine Normalisierung von Sensorinformation mit der Intensität (52), und/oder
b. eine Berechnung eines Polarisationsgrades durch Vergleich von p-polarisiertem und s-polarisiertem Licht, und/oder
c. eine Berechnung eines Absorptionsverhaltens durch Vergleich von verschiedenen Spektren des reflektierten Lichts.

9. Vorrichtung (100) nach einem der Ansprüche 1 bis 8, wobei die Bestimmungseinheit (40) oder die Signalverarbeitungsvorrichtung (45) eine Schnittstelle zum Empfangen der mindestens einen Gruppe von Pixeln (31) von einem externen Sensor (50) oder bekannter Daten aufweist.

10. Vorrichtung (100) nach einem der Ansprüche 1 bis 9, wobei die Bestimmungseinheit (40) dazu ausgebildet ist, den bestimmten Bereich in Segmente (61, 62, 63, 64) bestehend aus einem oder mehreren Pixeln zu unterteilen, um pro Segment (61, 62, 63, 64) einen Reibwertkoeffizienten-Wert zu bestimmen.

11. Vorrichtung (100) nach einem der Ansprüche 1 bis 10, wobei die Bestimmungseinheit (40) dazu ausgebildet ist, aus den Reibwertkoeffizienten-Werten Haftgrenzwerte (101) zu bestimmen, welche verschiedenen Positionen in dem Bereich zugeordnet sind, um ein Haftgrenzwerte-Netz in dem Bereich zu bestimmen, wobei der Haftgrenzwert (101) eine maximal übertragbare Reibkraft angibt.

12. Vorrichtung (100) nach einem der Ansprüche 1 bis 11, wobei die Bestimmungseinheit (40) dazu ausgebildet ist:
a. Referenzwerte in Abhängigkeit äußerer Umgebungsbedingungen und/oder der wirkenden Normalkraft zu speichern, um die Haftgrenzwerte (101) bei einem erneuten Erfassen der mindestens einen Gruppe von Pixeln (31) zu bestimmen;
b. und/oder Daten aus einer in-situ Messung zu empfangen, um in-situ die Reibwertkoeffizienten-Werte und/oder Haftgrenzwerte (101) in dem Bereich zu bestimmen, um die in-situ bestimmten Werte zu speichern.

13. Vorrichtung (100) nach Anspruch 11, wobei eine in-situ Messung eine oder mehrere der folgenden umfasst:
a. kontaktbasierte Messung und/oder
b. eine laserbasierte Messung und/oder
c. eine LIDAR basierte Messung und/oder
d. eine RADAR basiert Messung und/oder
e. in einer Cloud hinterlegte und abgefragte Messdaten umfasst.

14. Vorrichtung (100) nach einem der Ansprüche 7 bis 13, wobei die Signalverarbeitungsvorrichtung (45) und die Bestimmungseinheit (40) voneinander getrennt sind, oder wobei die Bestimmungseinheit (40) die Signalverarbeitungsvorrichtung (45) umfasst.

15. Vorrichtung (100) nach einem der vorhergehenden Ansprüche, wobei die Bestimmungseinheit (40) zum Bestimmen von Reibwertkoeffizienten-Werten dazu ausgebildet ist, eine mathematische Berechnung durchzuführen oder die Bestimmung auf Basis künstlicher Intelligenz durchzuführen.

16. Vorrichtung (100) nach einem der vorhergehenden Ansprüche, wobei die Bestimmungseinheit (40) dazu ausgebildet ist, zu einem Punkt in dem Bereich als ersten Wert eine Polarisationsrate (51) und/oder eine Lichtintensität (52) und/oder eine Absorptionsrate (53) zu berechnen, um damit den Reibwertkoeffizienten zu dem Punkt zu ermitteln.

17. Vorrichtung (100) nach Anspruch 4 oder 5, wobei die Bestimmungseinheit (40) dazu ausgebildet ist, von den Teilsensoren erfasste Daten an einem Ausgang, welcher mit keinem Filter und/oder keinem Bandpass und/oder mit einem der Filter und/oder mit einem der Bandpässe gekoppelt ist, zu empfangen, um die Polarisationsrate (51) und/oder die Lichtintensität (52) und/oder die Absorptionsrate (53) zu berechnen.

18. Vorrichtung (100) nach einem der vorherigen Ansprüche 1 bis 17, wobei die Bestimmungseinheit (40) dazu ausgebildet ist, die mindestens eine Gruppe von Pixeln (31) mit einer Referenzgruppe von Pixeln zu vergleichen,

19. Vorrichtung (100) nach einem der vorhergehenden Ansprüche, wobei die mindestens eine Gruppe von Pixeln (31) und eine zum zweiten Mal erfasste mindestens eine Gruppe von Pixeln (31) hinsichtlich der Position oder der Anzahl und Position der Pixel identisch sind, jedoch mit keinem Filter oder unterschiedlichen Filtern und/oder Bandpässen oder keinem Bandpass erfasst sind.

20. Vorrichtung (100) nach einem der vorhergehenden Ansprüche, wobei die Bestimmungseinheit (40) dazu ausgebildet ist, das Reibwertkoeffizienten-Netz (10) in verschiedene Teilbereiche zu unterteilen, wobei jeder Teilbereich einem einzigen bestimmten Reibwertkoeffizienten zugeordnet ist, insbesondere wobei die Vorrichtung dazu ausgebildet ist, die verschiedenen Teilbereiche in einer Falschfarbdarstellung visuell wiederzugeben.

21. Fortbewegungsmittel (1000) mit der Vorrichtung (100) gemäß einem der vorhergehenden Ansprüche, wobei das Fortbewegungsmittel (1000) einen zusätzlichen Sensor (150) umfasst, der dazu ausgebildet ist, der Bestimmungseinheit (40) Informationen bezüglich mindestens eines Referenzwertes und/oder bezüglich einer Bewegung des Fortbewegungsmittel (1000) zu liefern.

22. Fortbewegungsmittel (1000) nach Anspruch 21, welches eine Schnittstelle aufweist, die ausgebildet ist, um einen Fahrer des Fortbewegungsmittels (1000) zu alarmieren, wenn das Fortbewegungsmittel (1000) in eine Gleitbewegung überzugehen scheint

23. Fortbewegungsmittel (1000) nach Anspruch 22, wobei die Schnittstelle dazu ausgebildet ist, dem Fahrer das Reibwertkoeffizienten-Netz (10) mit seinen verschiedenen Segmenten (61, 62, 63, 64) als ein Bild (70) in einer Falschfarbdarstellung visuell widerzugeben.

24. Fortbewegungsmittel (1000) nach einem der Ansprüche 21 bis 23, wobei die Bestimmungseinheit (40) dazu ausgebildet ist, um die Steuerung (160) des Fortbewegungsmittels (1000) derart zu beeinflussen, um eine Bremskraft oder eine Beschleunigungskraft des Fortbewegungsmittels (1000) derart zu begrenzen, dass die in-situ bestimmten Reibwertkoeffizient-Werte einen Haftgrenzwert (101) nicht überschreiten, um ein Rutschen des Fortbewegungsmittels (1000) zu vermeiden und eine maximale Übertragung der Kraft auf eine Fahrbahn des Fortbewegungsmittels (1000) zu gewährleisten.

25. Verfahren zum vorausschauenden Bestimmen eines Reibwertkoeffizienten-Netzes (10) einer Oberfläche (20), wobei das Verfahren umfasst:
Erfassen mindestens einer Gruppe von Pixeln (31), um aus der mindestens einen Gruppe von Pixeln (31) ein Bereich einer Oberfläche (20) zu bestimmen und um in dem Bereich aus der mindestens einen Gruppe von Pixeln (31) ein erstes Netz aus ersten Werten zu bestimmen,
Bestimmen eines Bereiches der Oberfläche (20) auf Basis einer in der mindestens einen Gruppe von Pixeln (31) enthaltenen Information, und
Bestimmen von Reibwertkoeffizienten-Werten in einem Reibwertkoeffizienten-Netz (10), welches dem Bereich entspricht, basierend auf den ersten Werten des ersten Netzes, um eine Verteilung der bestimmten Reibwertkoeffizienten-Werte zu erhalten.

26. Verfahren zum Kalibrieren des Verfahrens nach Anspruch 25, wobei das Verfahren umfasst:
Erhalten von Daten aus einer in-situ Messung, um aus den zuvor bestimmten Reibwertkoeffizienten-Werten Haftgrenzwerte (1001) in dem Bereich zu bestimmen,
Speichern der bestimmten Haftgrenzwerte (101) als Referenzwerte.

27. Computerprogramm zur Durchführung des Verfahrens nach Anspruch 25 oder 26, wenn das Computerprogramm auf einem Rechner abläuft.
